# EUROPÄISCHE PATENTSCHRIFT

(11) **EP 1 509 368 B1**
(45) Veröffentlichungstag und Bekanntmachung des Hinweises auf die Patenterteilung: **09.01.2008**
(21) Anmeldenummer: 02807502.6
(22) Anmeldetag: 19.11.2002
(51) Int. Cl.: B26B 19/28, H02K 33/04

(54) **ANTRIEBSEINRICHTUNG ZUR ERZEUGUNG EINER OSZILLIERENDEN BEWEGUNG FÜR EIN ELEKTRISCHES KLEINGERÄT**
DRIVE DEVICE FOR GENERATING AN OSCILLATING MOTION FOR A SMALL ELECTRIC APPLIANCE
DISPOSITIF DE COMMANDE CONCU POUR GENERER UN MOUVEMENT D'OSCILLATION POUR UN PETIT APPAREIL ELECTRIQUE

(30) Priorität: 06.06.2002 DE 10225024
(43) Veröffentlichungstag der Anmeldung: 02.03.2005
(73) Patentinhaber: Braun GmbH, 61476 Kronberg (DE)
(72) Erfinder: KRAUS, Bernhard, 35619 Braunfels (DE); KLÖS, Alexander, 65719 Hofheim (DE)
(86) Internationale Anmeldenummer: PCT/EP2002/012929
(87) Internationale Veröffentlichungsnummer: WO 2003/103905

(56) Entgegenhaltungen:
- EP-A- 1 162 721
- DE-A- 1 463 988
- DE-B- 1 151 307
- US-A- 2 741 711
- US-A- 3 505 545
- US-A- 5 921 134
- US-B1- 6 226 871
- PATENT ABSTRACTS OF JAPAN vol. 2000, no. 14, 5. März 2001 (2001-03-05) -& JP 2000 316267 A (MATSUSHITA ELECTRIC WORKS LTD), 14. November 2000 (2000-11-14)

## Beschreibung

Die Erfindung betrifft eine Antriebseinrichtung zur Erzeugung einer oszillierenden Bewegung für ein elektrisches Kleingerät gemäß dem Oberbegriff des Anspruchs 1.

Aus der DE-A-1 151 307 ist eine Antriebseinrichtung bekannt, die einen Schwingankerantrieb für Trockenrasiergeräte mit hin- und hergehender Arbeitsbewegung eines Schermessers offenbart, der einen mit dem Gehäuse des Rasiergeräts fest verbundenen und U-förmig ausgebildeten Elektromagneten aufweist. In der Nähe der Pole des Elektromagneten sind ein Arbeitsanker und beiderseits des Arbeitsankers je ein Ausgleichsanker schwingfähig angeordnet. Im Betriebszustand schwingt der Arbeitsanker, der ein Schermesser antreibt, parallel zu den Polflächen des Elektromagneten, wobei die Ausgleichsanker eine dazu gegenphasige Schwingbewegung ausführen, um eine Übertragung der Schwingungen des Arbeitsankers auf das Gehäuse des Rasiergeräts möglichst zu verhindern.

Eine weitere Antriebseinrichtung ist aus der DE-A-1 463 988 bekannt, welche ebenfalls eine Spule zur Ausbildung eines Magnetfeldes offenbart, das von einer ersten Antriebskomponente ausgeht und auf eine zweite Antriebskomponente, die beweglich im elektrischen Kleingerät angeordnet derart einwirkt, daß die zweite Antriebskomponente in eine oszillierende Bewegung versetzt wird. Die erste Antriebskomponente ist dabei auf einer Arbeitsplatte befestigt, welche derart gelagert ist, daß sie gegenphasig zur zweiten Antriebskomponente oszillieren kann.

Die DE 196 80 506 T1 offenbart einen oszillierenden Linearmotor mit einem stationären Elektromagneten und mehreren beweglichen Komponenten, die mit Hilfe des Elektromagneten in zueinander gegenphasige Schwingungsbewegungen versetzt werden. Um die Phasenbeziehung der beweglichen Komponenten zueinander auch unter Belastung einzuhalten, sind diese mittels eines Lenkermechanismus untereinander verbunden, der die Schwingungsbewegung unter Umkehrung der Richtung von der einen auf die andere bewegliche Komponente überträgt.

Aus der DE 197 81 664 C2 ist ein elektrischer Rasierer mit einem Linearantrieb bekannt, der einen hohlzylindrisch ausgebildeten Stator mit einer elektromagnetischen Spule aufweist. Im Stator sind zwei bewegliche Elemente angeordnet, die gegenphasig zueinander angetrieben werden und von denen eines ein Schermesser antreibt und das andere zur Unterdrückung unerwünschter Vibrationen ein Gegengewicht aufweisen kann.

Schließlich ist aus der US 3 505 545 eine Haarschneidemaschine mit einem Schwinganker bekannt, wobei der Schwinganker mit einem Dauermagneten versehen ist.

Der Erfindung liegt die Aufgabe zugrunde, eine Antriebseinrichtung zur Erzeugung einer oszillierenden Bewegung für ein elektrisches Kleingerät mit verbesserten Eigenschaften anzugeben.

Diese Aufgabe wird durch die Merkmalskombination gemäß Anspruch 1 gelöst.

Die erfindungsgemäße Antriebseinrichtung zum Erzeugen einer oszillierenden Bewegung wenigstens einer Arbeitseinheit eines elektrischen Kleingeräts weist eine Spule zur Ausbildung eines Magnetfelds auf, das von einer ersten Antriebskomponente ausgeht und auf eine zweite Antriebskomponente, die beweglich im elektrischen Kleingerät angeordnet ist, derart einwirkt, dass die zweite Antriebskomponente in eine oszillierende Bewegung versetzt wird. Die erste Antriebskomponente ist zur Ausführung einer zur zweiten Antriebskomponente gegenphasig oszillierenden Bewegung beweglich im elektrischen Kleingerät angeordnet. Dadurch, dass die zwei Antriebskomponenten gegenphasig zueinander schwingen wird eine wesentlich höhere Relativgeschwindigkeit zwischen den Antriebskomponenten erzielt als bei einem herkömmlichen Antrieb, bei dem sich nur eine Antriebskomponente bewegt und die andere Antriebskomponente ruht. Da der Wirkungsgrad bei derartigen Antrieben mit der Relativgeschwindigkeit der Antriebskomponenten zueinander zunimmt, lassen sich mit der erfindungsgemäßen Antriebseinrichtung höhere Wirkungsgrade erreichen als mit vergleichbaren bekannten Antrieben.

Wenigstens eine der beiden Antriebskomponenten kann einen oder mehrere Dauermagnete aufweisen. Weiterhin kann wenigstens eine der beiden Antriebskomponenten einen Wickelkern aufweisen, auf dem die Spule angeordnet ist. Damit lässt sich bei relativ geringen Abmessungen ein leistungsstarker Antrieb realisieren, dessen Stromaufnahme ausreichend gering ist, um beispielsweise einen Akku-Betrieb des elektrischen Kleingeräts zuzulassen.

Bei der erfindungsgemäßen Antriebseinrichtung kann wenigstens ein elastisches Element zur Erzeugung von Rückstellkräften vorgesehen sein. Dadurch wird ein schwingungsfähiges System ausgebildet, das bevorzugt unter Resonanzbedingungen betrieben wird.

Weiterhin ist es von Vorteil, wenn die erste Antriebskomponente und die zweite Antriebskomponente durch wenigstens ein Koppelelement mechanisch miteinander gekoppelt sind. Dadurch kann eine strikte Einhaltung der Gegenphasigkeit der Schwingungsbewegungen der beiden Antriebskomponenten sichergestellt werden. Insbesondere ist das Koppelelement an die erste Antriebskomponente und an die zweite Antriebskomponente jeweils drehbar angelenkt. Die Gegenphasigkeit kann dabei in besonders einfacher Weise dadurch hergestellt werden, dass das Koppelelement drehbar gelagert ist. In einem bevorzugten Ausführungsbeispiel ist das Koppelelement an einer Befestigungsachse zur Befestigung der Antriebseinrichtung an dem elektrischen Kleingerät drehbar gelagert. Dies bietet sich deshalb an, weil der Drehpunkt des Koppelelements sich nicht bewegt und somit eine Befestigung an dem Kleingerät problemlos möglich ist. Die Befestigungsachse kann mittig zwischen der Anlenkung des Koppelelements an der ersten Antriebskomponente und an der zweiten Antriebskomponente angeordnet sein. Dies hat den Vorteil, dass die damit einhergehende Amplitudengleichheit der Schwingungsbewegungen der beiden Antriebskomponenten auch bei unterschiedlicher Belastung der Antriebskomponenten eingehalten wird. Für eine Vielzahl von Anwendungsfällen ist es von Vorteil, das Koppelelement als Drehbalken auszubilden. Bei diesen und auch bei anderen Ausgestaltungen kann das Koppelelement über wenigstens einen zusätzlichen Antriebsabgriff zum Abgriff einer Schwingungsbewegung verfügen, die eine andere Amplitude als die Schwingungen der ersten und der zweiten Antriebskomponente aufweist. Dies hat den Vorteil, dass für die Bereitstellung der zusätzlichen Schwingungsbewegung kein Getriebe benötigt wird und somit der Aufwand reduziert und die Zuverlässigkeit erhöht wird.

Gemäß einer Variante der Erfindung ist die Antriebseinrichtung als Linearmotor ausgebildet, bei dem die beiden Antriebskomponenten relativ zueinander verschiebbar sind, so dass eine linear oszillierende Bewegung entsteht. Bei einem bevorzugten Ausführungsbeispiel des Linearmotors ist das elastische Element als Blattfeder ausgebildet, die an der ersten Antriebskomponente und an der zweiten Antriebskomponente befestigt ist. Die Blattfeder wirkt damit einer Auslenkung der beiden Antriebskomponenten relativ zueinander entgegen und hat den Vorteil, dass sie extrem wenig Bauraum beansprucht. Insbesondere kann die Blattfeder jeweils an wenigstens einer der Antriebskomponenten mit Spiel quer zur Bewegungsrichtung der Antriebskomponenten befestigt sein, so dass die mit der Biegung einhergehende Längenreduzierung der Blattfeder ermöglicht wird. Dies kann alternativ auch dadurch erreicht werden, dass das Koppelelement jeweils an wenigstens eine der Antriebskomponenten mit Spiel quer zur Bewegungsrichtung der Antriebskomponenten angelenkt ist.

Das Koppelelement kann drehbar an Umlenkhebel angelenkt sein, die jeweils mit der vom Anlenkungsort weiter entfernten Antriebskomponente verbunden sind. Diese Maßnahme hat zur Folge, dass die beiden Antriebskomponenten in der Gleichgewichtsposition einander maximal angenähert sind und sich bei einer Auslenkung aus der Gleichgewichtsposition voneinander entfernen.

In einem bevorzugten Ausführungsbeispiel sind das Produkt aus der Masse der ersten Antriebskomponente und dem Abstand zwischen der Anlenkung des Koppelelements an der ersten Antriebskomponente und der Befestigungsachse und das Produkt aus der Masse der zweiten Antriebskomponente und dem Abstand zwischen der Anlenkung des Koppelelements an der zweiten Antriebskomponente und der Befestigungsachse gleich. Dies hat den Vorteil, dass die auf das elektrische Kleingerät übertragenen Vibrationen sehr gering gehalten werden können.

Im Rahmen der Erfindung ist es möglich, die beiden Antriebskomponenten identisch auszubilden, so dass der Herstellungsaufwand sehr niedrig gehalten werden kann. Weiterhin besteht die Möglichkeit, dass der Wickelkern relativ zur Spule verschiebbar angeordnet ist. Da sich bei einem derartigen Ausführungsbeispiel die Spule nicht mit dem Wickelkern mitbewegt, können die beweglichen Massen gering gehalten werden, so dass weniger Vibrationen am elektrischen Kleingerät verursacht werden. Außerdem vereinfacht sich die Kontaktierung der Spule, da sich diese nicht bewegt.

Die erste Antriebskomponente und die zweite Antriebskomponente können mittels Linearlagern geführt sein. Auf diese Weise ist es möglich, eine besonders präzise Linearbewegung zu erzeugen. Ein ähnlicher Effekt kann auch dadurch erzielt werden, dass die erste Antriebskomponente und die zweite Antriebskomponente mittels wenigstens eines Abstandselements auf einem konstanten Abstand zueinander gehalten werden. Das Abstandselement ist bevorzugt um die Befestigungsachse drehbar gelagert und stützt sich insbesondere über gekrümmte Flächen auf Auflageflächen der ersten und der zweiten Antriebskomponente ab. Die gekrümmten Flächen können als Zylindersegmente ausgebildet sein und die zu den Zylindersegmenten zugehörigen Zylinderachsen können jeweils mit der Befestigungsachse zusammenfallen.

Gemäß einer weiteren Variante der Erfindung ist die Antriebseinrichtung als Rotationsmotor ausgebildet, bei dem die beiden Antriebskomponenten relativ zueinander verdrehbar sind. Bei dem erfindungsgemäßen Rotationsmotor verfügen die beiden Antriebskomponenten vorzugsweise über eine gemeinsame Drehachse. Dadurch lässt sich die Entstehung unerwünschter Vibrationen weitgehend unterdrücken. Alternativ zur Ausbildung als Drehbalken kann das Koppelelement beispielsweise als Zahnrad ausgebildet sein, das in eine Verzahnung in der ersten Antriebskomponente und in eine Verzahnung in der zweiten Antriebskomponente eingreift.

Die Erfindung wird nachstehend an Hand der in der Zeichnung dargestellten Ausführungsbeispiele erläutert.

### Es zeigen jeweils in einer stark schematisierten Darstellung

- Fig. 1: ein Ausführungsbeispiel für einen oszillierenden Linearmotor,
- Fig. 2: ein weiteres Ausführungsbeispiel für einen oszillierenden Linearmotor,
- Fig. 3: das Ausführungsbeispiel aus Fig. 2 in einem anderen Bewegungszustand,
- Fig. 4: ein nochmals abgewandeltes Ausführungsbeispiel für einen oszillierenden Linearmotor,
- Fig. 5: ein Ausführungsbeispiel für einen oszillierenden Linearmotor, mit dem sich besonders präzise Linearbewegungen erzeugen lassen,
- Fig. 6: ein Ausführungsbeispiel für eine identische Ausbildung der ersten und zweiten Komponente des Linearmotors,
- Fig. 7: ein Ausführungsbeispiel für eine identische Ausbildung der ersten und zweiten Komponente des Linearmotors mit zwei feststehenden Spulen,
- Fig. 8: ein weiteres Ausführungsbeispiel für die erste und zweite Komponente des Linearmotors mit zwei feststehenden Spulen,
- Fig. 9: ein Ausführungsbeispiel für die erste und zweite Komponente des Linearmotors mit einer feststehenden Spule,
- Fig. 10: ein Ausführungsbeispiel für einen oszillierenden Rotationsmotor und
- Fig. 11: das Ausführungsbeispiel aus Fig. 11 in einem anderen Bewegungszustand.

Die erfindungsgemäße Antriebseinrichtung kann als oszillierender Linearmotor oder als oszillierender Rotationsmotor ausgebildet sein. Mit dem oszillierenden Linearmotor werden Linearbewegungen kleiner Amplitude erzeugt, die beispielsweise bei elektrischen Rasieren zur Anwendung kommen können. Der oszillierende Rotationsmotor erzeugt kleine Drehbewegungen, deren Drehsinn sich periodisch umkehrt und eignet sich beispielsweise für den Einsatz bei elektrischen Zahnbürsten.

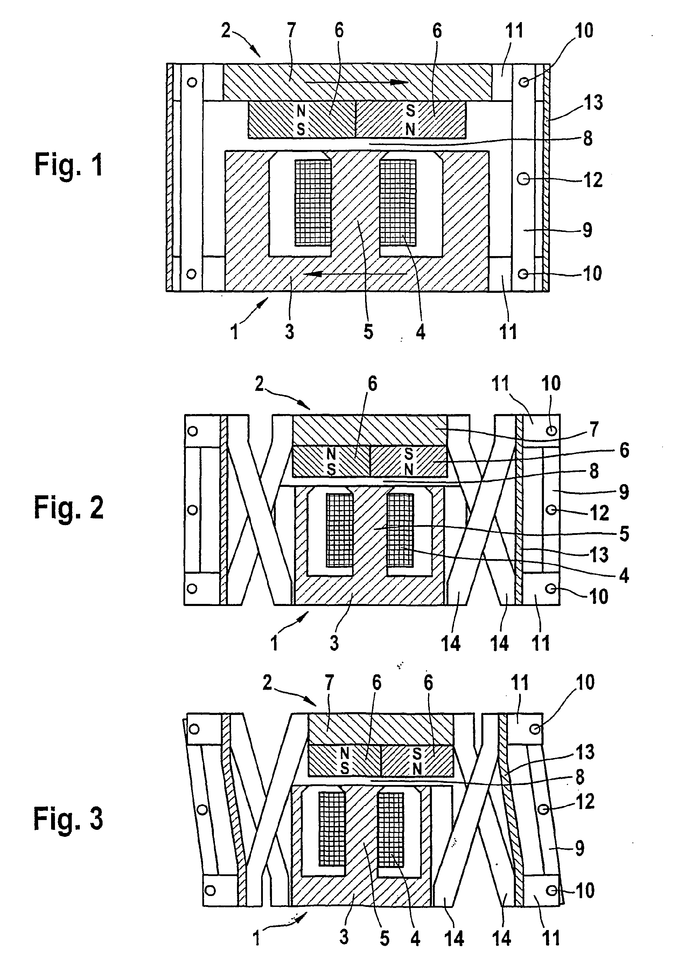

Fig. 1 zeigt ein Ausführungsbeispiel für einen oszillierenden Linearmotor in einer stark schematisierten Darstellung. Der Linearmotor weist zwei bewegliche Komponenten 1 und 2 auf, die in einem geringen Abstand zueinander angeordnet sind. Die erste Komponente 1 besteht aus einem Eisenkern 3, der in der Form eines "E" ausgebildet ist, und einer aus Draht gewickelten Spule 4. Die Spule 4 ist um einen Mittelbalken 5 des Eisenkerns 3 gewikkelt. Die zweite Komponente 2 weist zwei Dauermagnete 6 auf, die mit antiparallel orientierter Polung nebeneinander auf einer gemeinsamen Trägerplatte 7 angeordnet sind. Die Trägerplatte 7 besteht ebenso wie der Eisenkern 3 aus einem Eisenwerkstoff. Die Dauermagnete 6 sind bis auf einen Luftspalt 8 der Stirnseite des Mittelbalkens 5 des Eisenkerns 3 angenähert. Die Trägerplatte 7, auf der die Dauermagnete 6 angeordnet sind, stützt sich über zwei Streben 9 auf dem Eisenkern 3 ab. Die beiden Streben 9 sind jeweils im Bereich ihrer Enden mittels Verbindungsachsen 10 drehbar in Lagerklötzen 11 gelagert, die am Eisenkern 3 und an der Trägerplatte 7 befestigt sind. Mittig zwischen den Verbindungsachsen 10 weisen die beiden Streben 9 jeweils eine Befestigungsachse 12 auf, die der Befestigung des Linearmotors an seine Einbauumgebung, beispielsweise an das Gehäuse eines elektrischen Rasierers, dient. Parallel zu den Streben 9 erstrecken sich Blattfedern 13 zwischen den am Eisenkern 3 und an der Trägerplatte 7 befestigten Lagerklötzen 11.

Aus dem in Fig. 1 dargestellten mechanischen Aufbau des Linearmotors ergibt sich folgendes Bewegungsmuster: Die erste und die zweite Komponente 1 und 2 führen jeweils eine Schwingungsbewegung aus, die bei der Darstellung gemäß Fig. 1 im wesentlichen in horizontaler Richtung verläuft. Die Bewegungsrichtungen der beiden Komponenten 1 und 2 sind dabei jeweils einander entgegengesetzt, d h. die Schwingungen verlaufen gegenphasig zueinander. Die exakte Gegenphasigkeit der Schwingungen wird durch die drehbare Aufhängung der Streben 9 mittels der Befestigungsachsen 12 erzwungen. Diese Aufhängung hat weiterhin zur Folge, dass die Bewegungsbahnen der Schwerpunkte der ersten und zweiten Komponente 1 und 2 geringfügig gekrümmt sind. In der Darstellung der Fig. 1 ist die Bewegungsbahn des Schwerpunkts der ersten Komponente 1 geringfügig nach unten und die Bewegungsbahn des Schwerpunkts der zweiten Komponente 2 geringfügig nach oben gekrümmt. Dies bedeutet, dass der Abstand zwischen der ersten und der zweiten Komponente 1 und 2 in der in Fig. 1 dargestellten Gleichgewichtsposition am größten ist, d. h. der Luftspalt 8 ist in der Gleichgewichtsposition maximal. Je weiter die beiden Komponenten 1 und 2 aus der Gleichgewichtsposition ausgelenkt werden, desto geringer wird ihr Abstand. Die Rückkehr zur Gleichgewichtsposition wird durch die von den Blattfedern 13 erzeugten Rückstellkräfte angetrieben. In der Gleichgewichtsposition sind die Blattfedern 13 nicht gebogen und folglich werden keine Rückstellkräfte erzeugt. Ohne die Einwirkung weiterer Kräfte würden die beiden Komponenten 1 und 2 somit in der Gleichgewichtsposition verharren. Mit zunehmender Auslenkung der beiden Komponenten 1 und 2 aus der Gleichgewichtsposition werden die Blattfedern 13 zunehmend S-förmig gebogen, so dass Rückstellkräfte in Richtung Gleichgewichtsposition wirksam werden. Mit der S-förmigen Biegung der Blattfedern 13 geht jeweils eine Verringerung ihrer Längsabmessungen einher. Dies kann konstruktiv dadurch berücksichtigt werden, dass die Blattfedern 13 jeweils an wenigstens einem Lagerklotz 11 mit einem geringfügigen Spiel in Längsrichtung, d. h. quer zur Bewegungsrichtung der Komponenten 1 und 2, befestigt werden. Ebenso ist es auch möglich, die Streben 9 mit einem geringfügigen Spiel in Längsrichtung an wenigstens einem Lagerklotz 11 aufzuhängen. Das Spiel kann beispielsweise über eine elastische Aufhängung oder eine Aufhängung durch einen Eingriff in Langlöcher realisiert werden, die optional eine elastische Einlage aufweisen können.

Zur Erzeugung der beschriebenen Schwingungsbewegungen der beiden Komponenten 1 und 2 wird ein Stromfluss durch die Spule 4 hergestellt. Die Spule 4 wirkt als Elektromagnet und erzeugt unterstützt durch den Eisenkern 3 ein Magnetfeld, das auf die Dauermagnete 6 einwirkt und eine Relativbewegung zwischen der Spule 4 und den Dauermagneten 6 zur Folge hat. Durch entsprechende Ansteuerung der Spule 4 kann das damit erzeugte Magnetfeld jeweils umgepolt werden, so dass die erste und die zweite Komponente 1 und 2 in zueinander gegenphasige Schwingungen versetzt werden. Dabei besteht ein wesentlicher Aspekt der Erfindung darin, dass sich sowohl die erste Komponente 1 als auch die zweite Komponente 2 bewegt, d. h., dass der erfindungsgemäße Linearmotor keinen Stator aufweist, mit dessen Hilfe ein Läufer angetrieben wird, sondern zwei gegeneinander schwingende Komponenten 1 und 2, die sich gegenseitig antreiben. Eine dieser Komponenten 1 oder 2 entspricht dem Läufer eines herkömmlichen Linearmotors. Die andere übernimmt die Funktionen des Stators eines herkömmlichen Linearmotors, ist aber im Gegensatz zu diesem nicht statisch, sondern bewegt sich ebenfalls. Dies führt unter anderem auch dazu, dass sich unter sonst gleichen Bedingungen die erste und zweite Komponente 1 und 2 des erfindungsgemäßen Linearmotors mit einer Relativgeschwindigkeit zueinander bewegen, die doppelt so hoch wie die Relativgeschwindigkeit zwischen einem Stator und einem Läufer eines herkömmlichen Linearmotors ist. Dadurch lässt sich beim erfindungsgemäßen Linearmotor ein relativ hoher Wirkungsgrad erzielen.

Die Frequenz der Schwingungsbewegung der beiden Komponenten 1 und 2 wird über die Ansteuerung der Spule 4 vorgegeben und insbesondere so eingestellt, dass sie der Resonanzfrequenz des Schwingungssystems entspricht, das durch die beiden Komponenten 1 und 2 und die Blattfedern 13 gebildet wird. Unter Resonanzbedingungen ergibt sich ein sehr robustes Schwingungsverhalten und es ist lediglich eine vergleichsweise geringe Energiezufuhr erforderlich.

Fig. 2 zeigt ein weiteres Ausführungsbeispiel des erfindungsgemäßen Linearmotors in einer Fig. 1 entsprechenden Darstellung. Dieses Ausführungsbeispiel unterscheidet sich von Fig. 1 im wesentlichen dadurch, dass jeder Strebe 9 zwei Umlenkhebel 14 zugeordnet sind. Die Umlenkhebel 14 stellen jeweils eine starre Verbindung zwischen einem der Lagerklötze 11 und dem Eisenkern 3 oder der Trägerplatte 7 her. Dabei erstrecken sich die Umlenkhebel 14 von den Lagerklötzen 11 jeweils nicht zum benachbarten Eisenkern 3 bzw. zu der benachbarten Trägerplatte 7, sondern zu dem jeweils gegenüberliegenden Bauteil, so dass sich die Umlenkhebel 14 kreuzen. Die Umlenkhebel 14 liegen nicht direkt an den Lagerklötzen 11 an, sondern klemmen die Blattfedern 13 ein, die auf diese Weise ebenfalls an den Lagerklötzen 11 befestigt sind. Durch die Überkreuz-Anordnung der Umlenkhebel 14 wird die mit der Schwingungsbewegung der ersten und zweiten Komponente 1 und 2 einhergehende Querbewegung, durch die die Breite des Luftspalts 8 periodisch geändert wird, in ihrer Bewegungsrichtung umgekehrt. In der in Fig. 2 dargestellten Gleichgewichtsposition nimmt der Luftspalt 8 somit seinen kleinsten Wert an. Mit zunehmender Auslenkung wird der Luftspalt 8 zunehmend breiter.

Ein ausgelenkter Zustand ist beispielhaft in Fig. 3 dargestellt. Bei dieser Momentaufnahme sind die erste Komponente 1 nach links und die zweite Komponente 2 nach rechts aus der Gleichgewichtsposition ausgelenkt. Abgesehen von den Umlenkhebeln 14 entspricht das Ausführungsbeispiel gemäß den Fig. 2 und 3 in seinem Aufbau und seiner Funktionsweise dem in Fig. 1 dargestellten Ausführungsbeispiel und wird bei Anwendungsfällen eingesetzt, bei denen das geschilderte abweichende Verhalten bei der Variation der Breite des Luftspalts 8 erwünscht ist.

Abweichend von der in den Fig. 1, 2 und 3 dargestellten mittigen Anordnung der Befestigungsachse 12 zwischen den Verbindungsachsen 10 kann auch eine außermittige Anordnung gewählt werden, wenn unterschiedlich große Schwingungsamplituden der ersten und der zweiten Komponente 1 und 2 gewünscht werden. So kann beispielsweise beim Einsatz des erfindungsgemäßen Linearmotors bei einem elektrischen Rasierer das Untermesser mit einer großen und die Scherfolie mit einer kleinen Schwingungsamplitude betrieben werden. Weiterhin ist es auch möglich, über die Position der Befestigungsachse 12 relativ zu den Verbindungsachsen 10 das Vibrationsverhalten zu optimieren. Um die Vibrationen im Bereich der Befestigungsachse 12, die der Befestigung des Linearmotors dient, möglichst gering zu halten wird die Befestigungsachse 12 so angeordnet, dass das Produkt aus der Gesamtmasse der ersten Komponente 1 inklusive fest damit verbundener Bauteile und dem für diese Masse relativ zur Befestigungsachse 12 wirksamen Hebelarm den gleichen Wert annimmt wie das Produkt aus der Gesamtmasse der zweiten Komponente 2 inklusive fest damit verbundener Bauteile und dem für diese Masse relativ zur Befestigungsachse 12 wirksamen Hebelarm.

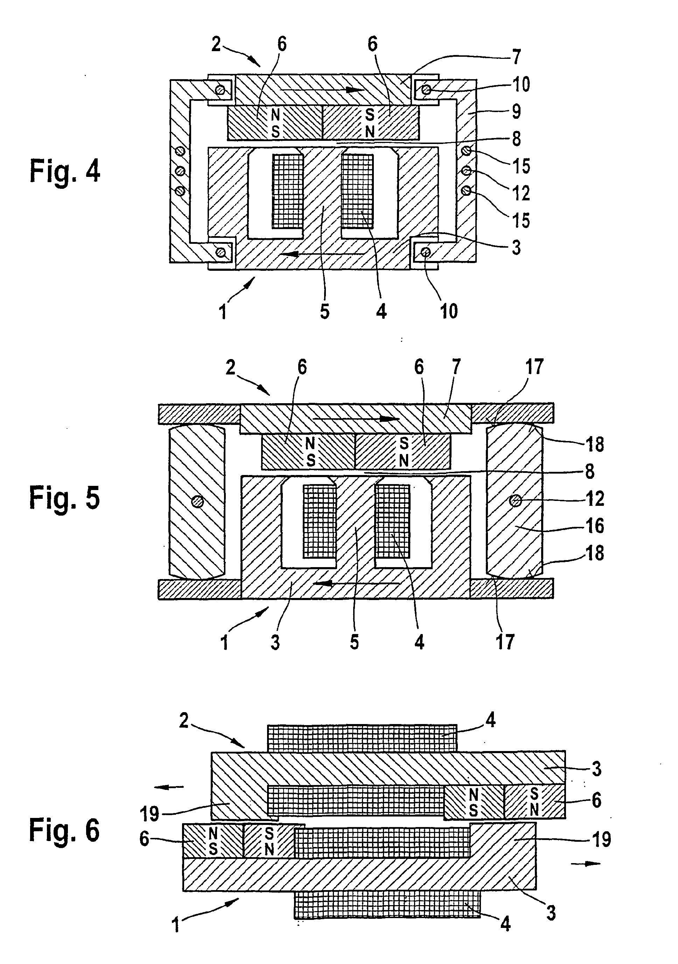

Fig. 4 zeigt ein weiteres Ausführungsbeispiel für einen oszillierenden Linearmotor in einer Fig. 1 entsprechenden Darstellung. Dieses Ausführungsbeispiel unterscheidet sich von dem Ausführungsbeispiel gemäß Fig. 1 dadurch, dass zusätzliche Antriebsabgriffe 15 vorhanden sind, die den Antrieb zusätzlicher Einheiten durch den erfindungsgemäßen Linearmotor ermöglichen. Außerdem sind die Streben 9 im Gegensatz zur Fig. 1 nicht stabförmig, sondern U-förmig ausgebildet und mit ihren Schenkeln direkt an den Eisenkern 3 bzw. an die Trägerplatte 7 angelenkt. Auf die Darstellung der Blattfedern !3 wurde aus Gründen der Übersichtlichkeit verzichtet.

Jede Strebe 9 weist zwei zusätzlichen Antriebsabgriffe 15 auf, die jeweils beiderseits der Befestigungsachse 12 angeordnet sind. Dabei ist jeweils auf einer Strebe 9 ein zusätzlicher Antriebsabgriff 15 auf der Seite der ersten Komponente 1 angeordnet und bewegt sich somit gleichphasig mit der ersten Komponente 1. Der zweite zusätzliche Antriebsabgriff 15 derselben Strebe 9 ist jeweils auf der Seite der zweiten Komponente 2 angeordnet und bewegt sich gleichphasig mit der zweiten Komponente 2 und gegenphasig zum ersten zusätzlichen Antriebsabgriff 15. Da die beiden zusätzlichen Antriebsabgriffe 15 einer Strebe 9 sehr viel näher an der Befestigungsachse 12 angeordnet sind, als dies für die beiden Verbindungsachsen 10 derselben Strebe 9 der Fall ist, weisen die an den zusätzlichen Antriebsabgriffen 15 abgegriffenen Bewegungen jeweils eine wesentlich geringere Amplitude auf als die Bewegungen der ersten und der zweiten Komponente 1 und 2. Ist die Befestigungsachse 12, wie in Fig. 3 dargestellt, mittig zwischen den beiden zusätzlichen Antriebsabgriffen 15 der Strebe 9 angeordnet, so sind die an diesen Antriebsabgriffen 15 abgegriffenen Bewegungsamplituden gleich groß. Bei der Optimierung des Vibrationsverhaltens sind auch die über die Antriebsabgriffe 15 angetriebenen Baugruppen zu berücksichtigen. Minimale Vibrationen entstehen dann, wenn die Summe sämtlicher Impulse gleich Null ist. Bei der in Fig. 3 dargestellten Geometrie wird ein verschwindender Gesamtimpuls dadurch erreicht, dass die Masse der ersten Komponente 1 inklusive der sich mit der ersten Komponente 1 gleichphasig bewegenden Baugruppen gleich der Masse der zweiten Komponente 2 inklusive der sich mit der zweiten Komponente 2 gleichphasig bewegenden Baugruppen ist.

Das in Fig. 4 dargestellte Ausführungsbeispiel des erfindungsgemäßen Linearmotors lässt sich beispielsweise bei einem elektrischen Rasiere mit zwei Schermesserblöcken einsetzen. Der Linearmotor wird über die beiden Befestigungsachsen 12 am Gehäuse des Rasierers befestigt. Je ein Schermesserblock wird an der ersten und an der zweiten Komponente 1 und 2 angekoppelt, so dass sich die beiden Schermesserblöcke gegenphasig bewegen. Der Kopf des Rasierers und damit die Scherfolie wird durch Ankoppelung an einen zusätzlichen Antriebsabgriff 15 mit kleiner Amplitude betrieben. Falls der Rasierer über zwei getrennte Scherfolien verfügt, ist es auch möglich die beiden Scherfolien durch Ankoppelung and zwei Antriebsabgriffe 15 mit kleiner Amplitude gegenphasig zueinander anzutreiben. Die Ankoppelung erfolgt dabei so, dass die Bewegung der Scherfolien jeweils auch gegenphasig zum jeweils zugeordneten Schermesserblock erfolgt.

Wenn die eingangs beschriebenen bogenförmigen Bewegungsbahnen der ersten und der zweiten Komponente 1 und 2 nicht erwünscht sind und statt dessen exakt lineare Bewegungen erforderlich sind, ist die Zwangsführung der ersten und der zweiten Komponente 1 und 2 entsprechend abzuwandeln. Eine derartige Abwandlungsmöglichkeit besteht in dem Einsatz von Linearführungen, mit denen sich die erste und zweite Komponente 1 und 2 sehr präzise auf eine lineare Bewegungsbahn zwingen lassen. Weiterhin ist es auch möglich, die in Fig. 5 dargestellten Abwandlungen vorzunehmen.

Fig. 5 zeigt ein Ausführungsbeispiel des erfindungsgemäßen Linearmotors, mit der sich besonders präzise Linearbewegungen erzeugen lassen. Die Art der Darstellung wurde entsprechend Fig. 1 gewählt, wobei die Blattfedern 13 wiederum aus Gründen der Übersichtlichkeit weggelassen wurden. Bei diesem Ausführungsbeispiel erfolgt die Koppelung der ersten und der zweiten Komponente 1 und 2 mittels zweier Abstandselemente 16. Die beiden Abstandselemente 16 sind mittels der Befestigungsachsen 12 für den Linearmotor drehbar gelagert. An ihren Stirnflächen 17, die sich auf dafür vorgesehenen Auflageflächen 18 der ersten und der zweiten Komponente 1 und 2 abstützen, weisen die Abstandselemente 16 jeweils eine Krümmung auf.

Beim Betrieb des Linearmotors rollen die Auflageflächen 18 auf den Stirnflächen 17 der Abstandselemente 16 ab und verdrehen die Abstandselemente 16 um die Befestigungsachsen 12. Dies bewirkt zum einen eine mechanische Kopplung der Bewegungen der ersten und der zweiten Komponente 1 und 2. Zum anderen ist die Krümmung auf jeder Stirnfläche 17 so ausgebildet, dass der Abstand der gegenüberliegenden Auflageflächen 18 trotz der Schwingungsbewegungen der ersten und zweiten Komponente 1 und 2 zu jedem Zeitpunkt gleich bleibt. Bei der dargestellten Geometrie wird dies jeweils durch die Ausbildung der Stirnfläche 17 als Zylindersegment erreicht, wobei die Zylinderachse mit der Befestigungsachse 12 zusammenfällt. Da die Dauermagnete 6 eine starke Anziehungskraft auf den Eisenkern 3 ausüben, ist eine mechanische Verbindung zwischen den Abstandselementen 16 und dem Eisenkern 3 bzw. der Trägerplatte 7 nicht zwingend erforderlich. Es besteht jedoch jeweils die Möglichkeit entsprechende Halterungen oder ähnliches vorzusehen. Um eine Änderung der Phasenbeziehung zwischen der ersten und der zweiten Komponente 1 und 2 durch zwischen den Auflageflächen 18 und den Stirnflächen 17 auftretenden Schlupf oder ähnliche Effekte zu verhindern, können die Auflageflächen 18 und die Stirnflächen 17 als ineinandergreifende Verzahnungen ausgebildet sein.

Je nach den Anforderungen und dem verfügbaren Bauraum des jeweiligen Anwendungsfalls variiert die konstruktive Ausbildung der beiden Komponenten 1 und 2. Einige Ausführungsbeispiele für die Komponenten 1 und 2 sind in den Fig. 6 bis 9 dargestellt. Die Art der Darstellung wurde jeweils analog zu Fig. 1 gewählt. Weitere Elemente des Linearmotors, wie beispielsweise die Streben 9 oder die Blattfedern 13, sind in diesen Figuren der besseren Übersicht halber nicht dargestellt. Zur Ausbildung des Linearmotors sind diese und ggf. weitere Elemente jeweils zu ergänzen. Da bei den folgenden Ausführungsbeispielen die Spule 4 und die Dauermagnete 6 zum Teil auf dem selben Bauteil angeordnet sind, wäre dieses Bauteil sowohl als Eisenkern 3 als auch als Trägerplatte 7 zu bezeichnen. Um eine eindeutige Zuordnung zu gewährleisten, wird das Bauteil als Eisenkern 3 bezeichnet, wenn es eine Spule 4 und ggf. zusätzlich Dauermagnete 6 aufweist. Sind ausschließlich Dauermagnete 6 vorhanden, so wird das Bauteil als Trägerplatte 7 bezeichnet.

Fig. 6 zeigt ein Ausführungsbeispiel, bei der die erste und die zweite Komponente 1 und 2 identisch ausgebildet sind. Die beiden Komponenten 1 und 2 weisen jeweils einen langgestreckten Eisenkern 3 auf, an dessen einem Ende eine Schulter 19 ausgebildet ist. Im Anschluss an die Schulter 19 ist die Spule 4 auf den Eisenkern 3 gewickelt. Im Bereich seines zweiten Endes sind die Dauermagnete 6 neben der Spule 4 auf den Eisenkern 3 aufgeklebt. Die derart ausgebildeten Komponenten 1 und 2 liegen sich antiparallel gegenüber, d. h. die Schulter 19 der ersten Komponente 1 ist den Dauermagneten 6 der zweiten Komponente 2 benachbart und die Dauermagnete 6 der ersten Komponente 1 sind der Schulter 19 der zweiten Komponente 2 benachbart. Dieses Ausführungsbeispiel zeichnet sich somit dadurch aus, dass die gegeneinander schwingenden Komponenten 1 und 2 exakt die gleiche Masse besitzen und sehr dicht zueinander angeordnet sind. Durch die identische Ausbildung der beiden Komponenten 1 und 2 vereinfacht sich der Herstellungsprozess und die Anzahl der zu fertigenden Teile verringert sich.

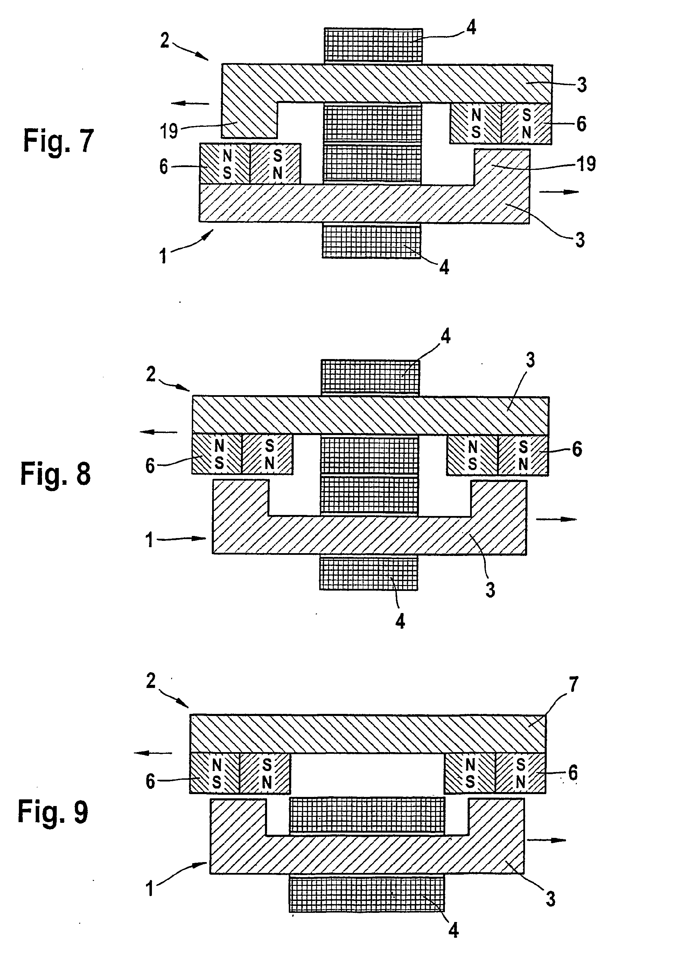

Fig. 7 zeigt ein weiteres Ausführungsbeispiel, bei der die erste und die zweite Komponente 1 und 2 identisch ausgebildet sind. Diese Ausführungsbeispiel unterscheitet sich von Fig. 6 dadurch, dass jeweils zwischen der Spule 4 und der benachbarten Schulter 19 bzw. den benachbarten Dauermagneten 6 noch ein Freiraum besteht und die Spule 4 jeweils nicht auf dem Eisenkern 3 fixiert ist. Die Spulen 4 sind somit nicht mechanisch mit den weiteren Bestandteilen der Komponenten 1 und 2 verbunden und bewegen sich nicht mit diesen mit, sondern sind feststehend. Dadurch reduzieren sich zum einen die bewegten Massen und infolge dessen die dadurch hervorgerufenen Vibrationen. Zum anderen ist die Kontaktierung der Spulen 4 vereinfacht, da sich diese nicht bewegen und somit keine so hohen Anforderungen an die Kontaktausbildung zu stellen sind. Die Eisenkerne 3 sind entsprechend Fig. 6 ausgebildet und führen eine entsprechende Schwingungsbewegung aus.

Fig. 8 zeigt ein weiteres Ausführungsbeispiel mit feststehenden Spulen 4. Dieses Ausführungsbeispiel weist einen U-förmig und einen stabförmig ausgebildeten Eisenkern 3 auf. Jeder Eisenkern 3 weist eine Spule 4 auf, die den Eisenkern 3 in einem geringen Abstand umgibt, so dass der Eisenkern 3 jeweils relativ zur Spule 4 verschoben werden kann. Auf den stabförmigen Eisenkern 3 sind zudem im Bereich seiner Enden die Dauermagnete 6 aufgeklebt. Die Eisenkerne 3 sind so zueinander positioniert, dass die Schenkel des U-förmigen Eisenkerns 3 den Dauermagneten 6 des stabförmigen Eisenkerns 3 benachbart sind.

Fig. 9 zeigt eine Abwandlung des Ausführungsbeispiels aus Fig. 8. Dieses Ausführungsbeispiel zeichnet sich gegenüber Fig. 8 dadurch aus, dass nur eine Spule 4 vorhanden ist. Diese Spule 4 umgibt den U-förmigen Eisenkern 3 in einem geringen Abstand, wobei wiederum eine Verschiebung des U-förmigen Eisenkerns 3 relativ zur Spule 4 möglich ist, so dass der U-förmige Eisenkern 3 bei feststehender Spule 4 eine Schwingungsbewegung vollziehen kann. Den Schenkeln des U-förmigen Eisenkerns 3 benachbart sind die auf der Trägerplatte 7 aufgeklebten Dauermagnete 6.

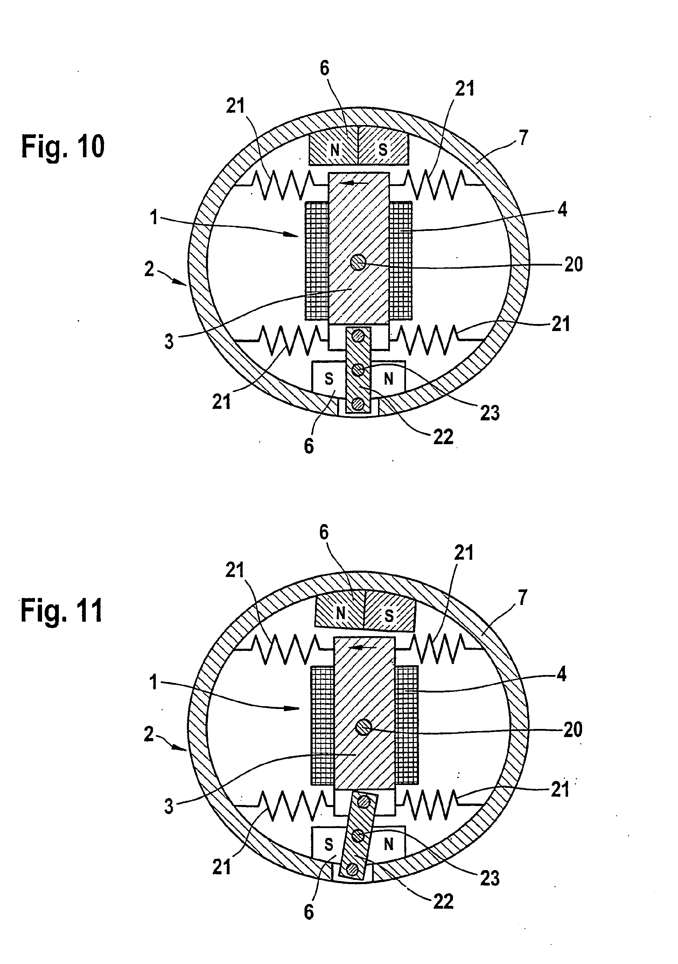

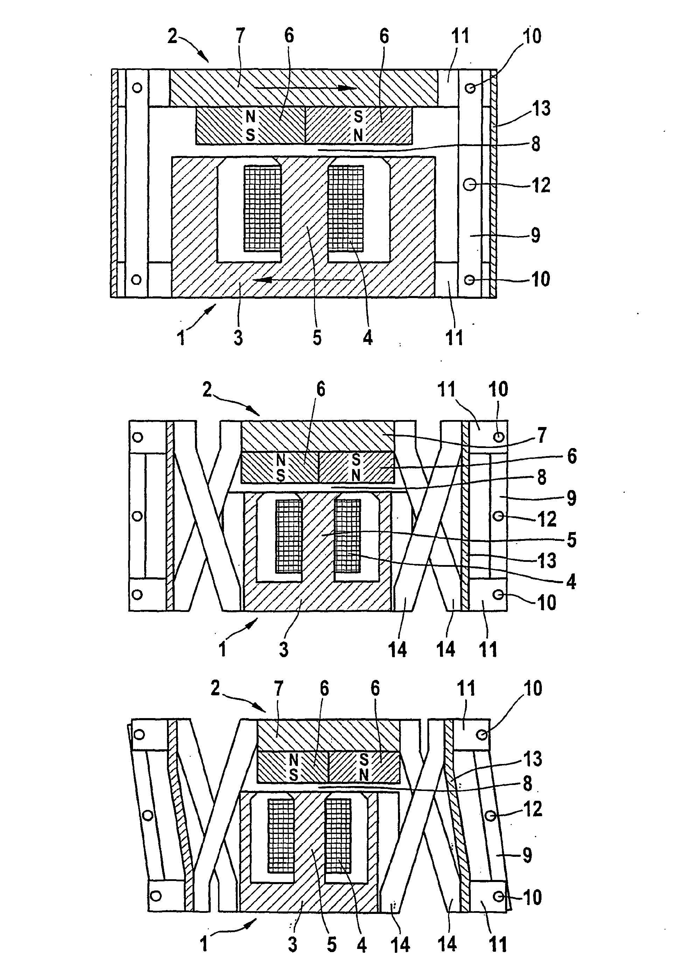

Alternativ zu den bislang beschriebenen oszillierenden Linearmotoren kann die erfindungsgemäße Antriebseinrichtung auch als oszillierender Rotationsmotor ausgebildet sein. Ein entsprechendes Ausführungsbeispiel ist in den Fig. 10 und 11 dargestellt.

Fig. 10 und 11 zeigen ein Ausführungsbeispiel eines erfindungsgemäßen oszillierenden Rotationsmotors in unterschiedlichen Bewegungszuständen in einer Fig. 1 entsprechenden Darstellung. In Fig. 10 befinden sich die erste und die zweite Komponente 1 und 2 des Rotationsmotors jeweils in Gleichgewichtsposition, in Fig. 11 sind die erste und zweite Komponente 1 und 2 jeweils ausgelenkt.

Bei dem dargestellten Ausführungsbeispiel ist der Eisenkern 3 stabförmig ausgebildet, so dass bei einer Bestromung der um den Eisenkern gewickelten Spule 4 an den Stirnflächen des Eisenkerns 3 magnetische Pole ausgebildet werden. In der Nähe zu beiden Stirnflächen des Eisenkerns 3 ist je wenigstens ein Dauermagnet 6 derart angeordnet, dass jeweils ein magnetischer Nordpol und ein magnetischer Südpol nebeneinander im gleichen Abstand zur Stirnfläche des Eisenkerns 3 zu liegen kommen. Die Trägerplatte 7, auf der die Dauermagnete 6 angeordnet sind, ist ringförmig ausgebildet und umschließt den Eisenkern 3 samt Spule 4. Dadurch können unerwünschte magnetische Streufelder relativ gering gehalten werden. Im Zentrum der ringförmigen Trägerplatte 7, das mit dem Zentrum des Eisenkerns 3 zusammenfällt, ist eine zentrale Achse 20 zur drehbaren Lagerung sowohl der ersten Komponente 1 als auch der zweiten Komponente 2 angeordnet, d. h. der einzige Bewegungsfreiheitsgrad sowohl für die erste Komponente 1 als auch für die zweite Komponente 2 besteht in einer Rotation um diese zentrale Achse 20. An zwei gegenüberliegenden Seiten in den beiden Endbereichen des Eisenkerns 3 ist je eine Schraubenfeder 21 angebracht. Die Schraubenfedern 21 erstrecken sich von ihren Angriffspunkten am Eisenkern 3 zur Trägerplatte 7. Falls sonst keine Kräfte einwirken wird die erste Komponente 1 durch die Schraubenfedern 21 in der in Fig. 10 dargestellten Gleichgewichtsposition gehalten.

An einen Endbereich des Eisenkerns 3 ist ein Drehbalken 22 mit seinem einen Ende drehbar angelenkt. Das andere Ende des Drehbalkens 22 ist an der Trägerplatte 7 drehbar angelenkt. Mittels einer mittig angeordneten Mittelachse 23 ist der Drehbalken 22 drehbeweglich aufgehängt. Mit der Mittelachse 23 kann auch die Anbindung des Rotationsmotors an einem damit angetriebenen Gerät erfolgen. Alternativ dazu kann die Anbindung an das Gerät auch über die zentrale Achse 20 erfolgen.

Mit dem erfindungsgemäßen Rotationsmotor kann auf folgende Weise eine oszillierende Rotationsbewegung erzeugt werden:

Wenn die Spule 4 von einem elektrischen Strom durchflossen wird, wird ein Magnetfeld erzeugt, das auf die Dauermagnete 6 einwirkt. Im Ergebnis kommt es dadurch zu einer Auslenkung der ersten und der zweiten Komponente 1 und 2 aus ihrer Gleichgewichtsposition. Entsprechend der Darstellung der Fig. 10 werden im Rahmen dieser Auslenkung der obere Dauermagnet 6 geringfügig nach rechts und der untere Dauermagnet 6 geringfügig nach links verschoben. Umgekehrt wird das obere Ende des Eisenkerns 3 geringfügig nach links und das untere Ende des Eisenkerns 3 geringfügig nach rechts verschoben, so dass die in Fig. 11 dargestellte ausgelenkte Position eingenommen wird. Bedingt durch die Zwangsführung der zentralen Achse 20 erfolgen die Verschiebungen jeweils längs einer Kreisbahn, d. h. es handelt sich um Drehbewegungen. Zu einem späteren Zeitpunkt wird der Stromfluss in der Spule 4 so geändert, dass sich die Verhältnisse umkehren und die Dauermagnete 6 und die Enden des Eisenkerns 3 jeweils zur anderen Seite ausgelenkt werden. Durch eine entsprechende Ansteuerung der Spule 4 können somit oszillierende Drehbewegungen der ersten Komponente 1 und der zweiten Komponente 2 erzeugt werden, die gegenphasig zueinander verlaufen. Die oszillierende Drehbewegung wird durch die Schraubenfedern 21 unterstützt, insbesondere dann, wenn die Spule 4 so angesteuert wird, dass die erste und die zweite Komponente 1 und 2 mit der Resonanzfrequenz oszillieren. Die exakte Einhaltung der Phasenbeziehung wird dabei durch den Drehbalken 22 gewährleistet, der durch seine in den Fig. 10 und 11 dargestellte Anlenkung und Lagerung eine Gegenphasigkeit der beiden Komponenten 1 und 2 erzwingt. Die strikte Einhaltung der Phasenbeziehung lässt sich auch durch andere Maßnahmen erreichen. So kann statt des Drehbalkens 22 auch ein Zahnrad vorgesehen sein, das in eine Verzahnung in der ersten Komponente 1 und in eine Verzahnung in der zweiten Komponente 2 eingreift.

## Patentansprüche

1. Antriebseinrichtung zum Erzeugen einer oszillierenden Bewegung wenigstens einer Arbeitseinheit eines elektrischen Kleingeräts mit einer Spule (4) zur Ausbildung eines Magnetfelds, das von einer ersten Antriebskomponente (1) ausgeht und auf eine zweite Antriebskomponente (2), die beweglich im elektrischen Kleingerät angeordnet ist, derart einwirkt, dass die zweite Antriebskomponente (2) in eine oszillierende Bewegung versetzt wird, wobei die erste Antriebskomponente (1) zur Ausführung einer zur zweiten Antriebskomponente (2) gegenphasig oszillierenden Bewegung beweglich im elektrischen Kleingerät angeordnet ist, **dadurch gekennzeichnet, dass** wenigstens eine der beiden Antriebskomponenten (1, 2) wenigstens einen Dauermagneten (6) aufweist, und wobei die erste Antriebskomponente (1) und die zweite Antriebskomponente (2) durch wenigstens ein Koppelelement (9, 22) mechanisch miteinander gekoppelt sind, das Koppelelement (9, 22) an die erste Antriebskomponente (1) und an die zweite Antriebskomponente (2) jeweils drehbar angelenkt ist und das Koppelelement (9, 22) drehbar gelagert ist.

2. Antriebseinrichtung nach Anspruch 1, **dadurch gekennzeichnet, dass** wenigstens eine der beiden Antriebskomponenten (1, 2) einen Wickelkern (3) aufweist, auf dem die Spule (4) angeordnet ist.

3. Antriebseinrichtung nach einem der vorhergehenden Ansprüche, **dadurch gekennzeichnet, dass** wenigstens ein elastisches Element (13, 21) zur Erzeugung von Rückstellkräften vorgesehen ist.

4. Antriebseinrichtung nach einem der vorhergehenden Ansprüche, **dadurch gekennzeichnet, dass** das Koppelelement (9, 22) an einer Befestigungsachse (12, 23) zur Befestigung der Antriebseinrichtung an dem elektrischen Kleingerät drehbar gelagert ist.

5. Antriebseinrichtung nach Anspruch 4, **dadurch gekennzeichnet, dass** die Befestigungsachse (12, 23) mittig zwischen der Anlenkung des Koppelelements (9, 23) an der ersten Antriebskomponente (1) und an der zweiten Antriebskomponente (2) angeordnet ist.

6. Antriebseinrichtung nach einem der vorhergehenden Ansprüche, **dadurch gekennzeichnet, dass** das Koppelelement (9, 22) als Drehbalken ausgebildet ist.

7. Antriebseinrichtung nach einem der vorhergehenden Ansprüche, **dadurch gekennzeichnet, dass** das Koppelelement (9, 22) über wenigstens einen zusätzlichen Antriebsabgriff (15) zum Abgriff einer Schwingungsbewegung verfügt, die eine andere Amplitude als die Schwingungen der ersten und der zweiten Antriebskomponente (1, 2) aufweist.

8. Antriebseinrichtung nach einem der vorhergehenden Ansprüche, **dadurch gekennzeichnet, dass** die Antriebseinrichtung als Linearmotor ausgebildet ist, bei dem die beiden Antriebskomponenten (1, 2) relativ zueinander verschiebbar sind.

9. Antriebseinrichtung nach einem der Ansprüche 3 bis 8, **dadurch gekennzeichnet, dass** das elastische Element (13) als Blattfeder ausgebildet ist, die an der ersten Antriebskomponente (1) und an der zweiten Antriebskomponente (2) befestigt ist.

10. Antriebseinrichtung nach Anspruch 9, **dadurch gekennzeichnet, dass** die Blattfeder (13) jeweils an wenigstens einer der Antriebskomponenten (1, 2) mit Spiel quer zur Bewegungsrichtung der Antriebskomponenten (1, 2) befestigt ist.

11. Antriebseinrichtung nach einem der Ansprüche 9 oder 10, **dadurch gekennzeichnet, dass** das Koppelelement (9) jeweils an wenigstens eine der Antriebskomponenten (1, 2) mit Spiel quer zur Bewegungsrichtung der Antriebskomponenten (1, 2) angelenkt ist.

12. Antriebseinrichtung nach einem der Ansprüche 8 bis 11, **dadurch gekennzeichnet, dass** das Koppelelement (9) drehbar an Umlenkhebel (14) angelenkt ist, die jeweils mit der vom Anlenkungsort weiter entfernten Antriebskomponente (1, 2) verbunden sind.

13. Antriebseinrichtung nach einem der Ansprüche 8 bis 12, **dadurch gekennzeichnet, dass** das Produkt aus der Masse der ersten Antriebskomponente (1) und dem Abstand zwischen der Anlenkung des Koppelelements (9) an der ersten Antriebskomponente (1) und der Befestigungsachse (12) und das Produkt aus der Masse der zweiten Antriebskomponente (2) und dem Abstand zwischen der Anlenkung des Koppelelements (9) an der zweiten Antriebskomponente (2) und der Befestigungsachse (12) gleich sind.

14. Antriebseinrichtung nach einem der Ansprüche 8 bis 13, **dadurch gekennzeichnet, dass** die beiden Antriebskomponenten (1, 2) identisch ausgebildet sind

15. Antriebseinrichtung nach einem der Ansprüche 8 bis 14, **dadurch gekennzeichnet, dass** der Wickelkern (3) relativ zur Spule (4) verschiebbar angeordnet ist.

16. Antriebseinrichtung nach einem der Ansprüche 8 bis 15, **dadurch gekennzeichnet, dass** die erste Antriebskomponente (1) und die zweite Antriebskomponente (2) mittels Linearlagern geführt sind.

17. Antriebseinrichtung nach einem der Ansprüche 8 bis 15, **dadurch gekennzeichnet, dass** die erste Antriebskomponente (1) und die zweite Antriebskomponente (2) mittels wenigstens eines Abstandselements (16) auf einem konstanten Abstand zueinander gehalten werden.

18. Antriebseinrichtung nach Anspruch 17, **dadurch gekennzeichnet, dass** das Abstandselement (16) um die Befestigungsachse (12) drehbar gelagert ist.

19. Antriebseinrichtung nach einem der Ansprüche 17 oder 18, **dadurch gekennzeichnet, dass** sich das Abstandselement (16) über gekrümmte Flächen (17) auf Auflageflächen (18) der ersten und der zweiten Antriebskomponente (1, 2) abstützt.

20. Antriebseinrichtung nach Anspruch 19, **dadurch gekennzeichnet, dass** die gekrümmten Flächen (17) als Zylindersegmente ausgebildet sind.

21. Antriebseinrichtung nach Anspruch 20, **dadurch gekennzeichnet, dass** die zu den Zylindersegmenten zugehörigen Zylinderachsen jeweils mit der Befestigungsachse (12) zusammenfallen.

22. Antriebseinrichtung nach einem der Ansprüche 1 bis 7, **dadurch gekennzeichnet, dass** die Antriebseinrichtung als Rotationsmotor ausgebildet ist, bei dem die beiden Antriebskomponenten (1, 2) relativ zueinander verdrehbar sind.

23. Antriebseinrichtung nach Anspruch 22, **dadurch gekennzeichnet, dass** die beiden Antriebskomponenten (1, 2) über eine gemeinsame Drehachse (20) verfügen.

24. Antriebseinrichtung nach einem der Ansprüche 22 oder 23, **dadurch gekennzeichnet, dass** das Koppelelement als Zahnrad ausgebildet ist, das in eine Verzahnung in der ersten Antriebskomponente (1) und in eine Verzahnung in der zweiten Antriebskomponente (2) eingreift.

25. Elektrisches Kleingerät mit einer oszillierenden Arbeitseinheit, **dadurch gekennzeichnet, dass** es eine Antriebseinrichtung nach einem der vorhergehenden Ansprüche aufweist.

## Claims

1. A drive mechanism for generating an oscillatory motion of at least one working unit of a small electric appliance, with a coil (4) for producing a magnetic field that extends from a first drive component (1) and acts upon a second drive component (2) that is movably arranged in the small electric appliance in such a way that the second drive component (2) is oscillated, wherein the first drive component (1) is movably arranged in the small electric appliance to oscillate in opposite phase to the second drive component (2), **characterized in that** at least one of the two drive components (1, 2) comprises at least one permanent magnet (6), and the first drive component (1) and the second drive component (2) are mechanically coupled to each other by at least one coupling element (9, 22), the coupling element (9, 22) is rotatably linked to the first drive component (1) and to the second drive component (2), and the coupling element (9, 22) is rotatably mounted.

2. The drive mechanism as claimed claim 1, **characterized in that** at least one of the two drive components (1, 2) comprises a wound core (3) on which the coil (4) is arranged.

3. The drive mechanism as claimed in any one of the preceding claims, **characterized in that** provision is made for at least one elastic element (13, 21) for producing restoring forces.

4. The drive mechanism as claimed in any one of the preceding claims, **characterized in that** the coupling element (9, 22) is rotatably mounted on a mounting axle (12, 23) for mounting the drive mechanism on the small electric appliance.

5. The drive mechanism as claimed in claim 4, **characterized in that** the mounting axle (12, 22) is arranged mid-way between a link of the coupling element (9, 22) to the first drive component (1) and to the second drive component (2).

6. The drive mechanism as claimed in any one of the preceding claims, **characterized in that** the coupling element (9, 22) is constructed as a rotary beam.

7. The drive mechanism as claimed in any one of the preceding claims, **characterized in that** the coupling element (9, 22) has at least one additional drive mount (15) for providing an oscillatory motion that has a different amplitude than the oscillations of the first and the second drive components (1, 2).

8. The drive mechanism as claimed in any one of the preceding claims, **characterized in that** the drive mechanism is constructed as a linear motor in which the two drive components (1, 2) are slidable relative to each other.

9. The drive mechanism as claimed in any one of the claims 3 to 8, **characterized in that** the elastic element (13) is constructed as a leaf spring that is fastened to the first drive component (1) and to the second drive component (2).

10. The drive mechanism as claimed in claim 9, **characterized in that** the leaf spring (13) is fastened to at least one of the drive components (1, 2) in a configuration to allow movement of the leaf spring across the direction of movement of the drive components (1, 2).

11. The drive mechanism as claimed in any one of the claims 9 or 10, **characterized in that** the coupling element (9) is linked to at least one of the drive components (1, 2) in a configuration to allow movement of the coupling element across the direction of movement of the drive components (1, 2).

12. The drive mechanism as claimed in any one of the claims 8 to 11, **characterized in that** the coupling element (9) is rotatably linked to reversing levers (14) that are each connected to the drive component (1, 2) positioned farther away from the linking location.

13. The drive mechanism as claimed in any one of the claims 8 to 12, **characterized in that** the product of the mass of the first drive component (1) and the distance between the linking location of the coupling element (9) on the first drive component (1) and the mounting axle (12) is equal to the product of the mass of the second drive component (2) and the distance between the linking location of the coupling element (9) on the second drive component (2) and the mounting axle (12).

14. The drive mechanism as claimed in any one of the claims 8 to 13, **characterized in that** the two drive components (1, 2) are of identical construction.

15. The drive mechanism as claimed in any one of the claims 8 to 14, **characterized in that** the wound core (3) is slidably arranged relative to the coil (4).

16. The drive mechanism as claimed in any one of the claims 8 to 15, **characterized in that** the first drive component (1) and the second drive component (2) are guided by means of linear bearings.

17. The drive mechanism as claimed in any one of the claims 8 to 15, **characterized in that** the first drive component (1) and the second drive component (2) maintain a constant distance from each other by means of at least one spacer element (16).

18. The drive mechanism as claimed in claim 17, **characterized in that** the spacer element (16) is mounted for rotation about the mounting axle (12).

19. The drive mechanism as claimed in any one of the claims 17 or 18, **characterized in that** the spacer element (16) takes support by means of curved surfaces (17) upon seating surfaces (18) of the first and the second drive component (1, 2).

20. The drive mechanism as claimed in claim 19, **characterized in that** the curved surfaces (17) are constructed as cylinder segments.

21. The drive mechanism as claimed in claim 20, **characterized in that** the cylinder axes associated with the cylinder segments coincide with the respective mounting axle (12).

22. The drive mechanism as claimed in any one of the claims 1 to 7, **characterized in that** the drive mechanism is constructed as a rotary motor in which the two drive components (1, 2) are adapted to rotate relative to each other.

23. The drive mechanism as claimed in claim 22, **characterized in that** the two drive components (1, 2) have a common axis of rotation (20).

24. The drive mechanism as claimed in any one of the claims 22 or 23, **characterized in that** the coupling element is constructed as a gearwheel which comprises teeth to mesh with teeth of the first drive component (1) and with teeth of the second drive component (2).

25. A small electric appliance with an oscillatory working unit, **characterized in that** it comprises a drive mechanism according to any one of the preceding claims.

## Revendications

1. Dispositif de commande conçu pour générer un mouvement d'oscillation d'au moins une unité de travail d'un petit appareil électrique avec une bobine (4) permettant de créer un champ magnétique, qui sort d'un premier composant de commande (1) et agit sur un deuxième composant de commande (2), qui est mobile dans le petit appareil électrique, de telle manière que le deuxième composant de commande (2) soit animé d'un mouvement oscillant, dans lequel le premier composant de commande (1) est mobile dans le petit appareil électrique en vue d'exécuter un mouvement oscillant en opposition de phase par rapport au deuxième composant de commande (2), **caractérisé en ce qu'**au moins un des deux composants de commande (1, 2) comporte au moins un aimant permanent (6), et dans lequel le premier composant de commande (1) et le deuxième composant de commande (2) sont couplés mécaniquement l'un à l'autre au moyen d'au moins un élément de couplage (9, 22), l'élément de couplage (9, 22) est chaque fois articulé à rotation sur le premier élément de commande (1) et sur le deuxième élément de commande (2), et l'élément de couplage (9, 22) est supporté de façon rotative.

2. Dispositif de commande selon la revendication 1, **caractérisé en ce qu'**au moins un des deux composants de commande (1, 2) comporte un noyau d'enroulement (3), sur lequel la bobine (4) est disposée.

3. Dispositif de commande selon l'une quelconque des revendications précédentes, **caractérisé en ce qu'**il est prévu au moins un élément élastique (13, 21) pour produire des forces de rappel.

4. Dispositif de commande selon l'une quelconque des revendications précédentes, **caractérisé en ce que** l'élément de couplage (9, 22) est supporté de façon rotative sur un axe de fixation (12, 23) permettant de fixer le dispositif de commande sur le petit appareil électrique.

5. Dispositif de commande selon la revendication 4, **caractérisé en ce que** l'axe de fixation (12, 23) est disposé au milieu entre l'articulation de l'élément de couplage (9, 23) sur le premier composant de commande (1) et sur le deuxième composant de commande (2).

6. Dispositif de commande selon l'une quelconque des revendications précédentes, **caractérisé en ce que** l'élément de couplage (9, 22) est formé par une poutre tournante.

7. Dispositif de commande selon l'une quelconque des revendications précédentes, **caractérisé en ce que** l'élément de couplage (9, 22) présente au moins une prise de commande supplémentaire (15) pour prélever un mouvement d'oscillation qui présente une autre amplitude que les oscillations du premier et du deuxième composants de commande (1, 2).

8. Dispositif de commande selon l'une quelconque des revendications précédentes, **caractérisé en ce que** le dispositif de commande est un moteur linéaire, dans lequel les deux composants de commande (1, 2) sont déplaçables l'un par rapport à l'autre.

9. Dispositif de commande selon l'une quelconque des revendications 3 à 8, **caractérisé en ce que** l'élément élastique (13) est un ressort à lame, qui est fixé au premier composant de commande (1) et au deuxième composant de commande (2).

10. Dispositif de commande selon la revendication 9, **caractérisé en ce que** le ressort à lame (13) est fixé respectivement à au moins un des composants de commande (1, 2) avec un jeu transversal à la direction de mouvement des composants de commande (1, 2).

11. Dispositif de commande selon l'une des revendications 9 ou 10, **caractérisé en ce que** l'élément de couplage (9) est articulé respectivement sur au moins un des composants de commande (1, 2) avec un jeu transversal à la direction de mouvement des composants de commande (1, 2).

12. Dispositif de commande selon l'une quelconque des revendications 8 à 11, **caractérisé en ce que** l'élément de couplage (9) est articulé de façon rotative sur des leviers de renvoi (14), qui sont reliés respectivement au composant de commande (1, 2) le plus éloigné du point d'articulation.

13. Dispositif de commande selon l'une quelconque des revendications 8 à 12, **caractérisé en ce que** le produit de la masse du premier composant de commande (1) et de la distance entre l'articulation de l'élément de couplage (9) sur le premier composant de commande (1) et l'axe de fixation (12) et le produit de la masse du deuxième composant de commande (2) et de la distance entre l'articulation de l'élément de couplage (9) sur le deuxième composant de commande (2) et l'axe de fixation (12) sont égaux.

14. Dispositif de commande selon l'une quelconque des revendications 8 à 13, **caractérisé en ce que** les deux composants de commande (1, 2) sont identiques.

15. Dispositif de commande selon l'une quelconque des revendications 8 à 14, **caractérisé en ce que** le noyau d'enroulement (3) est déplaçable par rapport à la bobine (4).

16. Dispositif de commande selon l'une quelconque des revendications 8 à 15, **caractérisé en ce que** le premier composant de commande (1) et le deuxième composant de commande (2) sont guidés au moyen de paliers linéaires.

17. Dispositif de commande selon l'une quelconque des revendications 8 à 15, **caractérisé en ce que** le premier composant de commande (1) et le deuxième composant de commande (2) sont maintenus à distance constante l'un de l'autre au moyen d'au moins un élément d'écartement (16).

18. Dispositif de commande selon la revendication 17, **caractérisé en ce que** l'élément d'écartement (16) est supporté de façon rotative autour de l'axe de fixation (12).

19. Dispositif de commande selon l'une des revendications 17 ou 18, **caractérisé en ce que** l'élément d'écartement (16) s'appuie par des surfaces courbes (17) sur des surfaces d'appui (18) du premier et du deuxième composants de commande (1, 2).

20. Dispositif de commande selon la revendication 19, **caractérisé en ce que** les surfaces courbes (17) sont des segments de cylindre.

21. Dispositif de commande selon la revendication 20, **caractérisé en ce que** les axes de cylindre appartenant aux segments de cylindre coïncident chaque fois avec l'axe de fixation (12).

22. Dispositif de commande selon l'une quelconque des revendications 1 à 7, **caractérisé en ce que** le dispositif de commande est un moteur rotatif, dans lequel les deux composants de commande (1, 2) peuvent tourner l'un par rapport à l'autre.

23. Dispositif de commande selon la revendication 22, **caractérisé en ce que** les deux composants de commande (1, 2) possèdent un axe de rotation commun (20).

24. Dispositif de commande selon l'une des revendications 22 ou 23, **caractérisé en ce que** l'élément de couplage est une roue dentée, qui engrène dans une denture dans le premier composant de commande (1) et dans une denture dans le deuxième composant de commande (2).

25. Petit appareil électrique comportant une unité de travail oscillante, **caractérisé en ce qu'**il comprend un dispositif de commande selon l'une quelconque des revendications précédentes.
